(19) Europäisches Patentamt
European Patent Office
Office européen des brevets

(11) **EP 4 597 374 A1**

(12) **EUROPEAN PATENT APPLICATION**

(43) Date of publication:
06.08.2025 Bulletin 2025/32

(51) International Patent Classification (IPC):
**G06N 3/096** (2023.01)    **G06N 3/045** (2023.01)
**G06N 5/01** (2023.01)    G06N 3/092 (2023.01)
**G06N 3/008** (2023.01)

(21) Application number: 24155250.4

(22) Date of filing: 01.02.2024

(52) Cooperative Patent Classification (CPC):
**G06N 3/045; G06N 3/096; G06N 5/01;** G06N 3/008;
G06N 3/092

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Naver Corporation**
Seongnam-si, Gyeonggi-do 13561 (KR)

(72) Inventors:
• **Drakulic, Darko**
**38000 Grenoble (FR)**
• **Michel, Sofia**
**38330 Saint Ismier (FR)**
• **Andreoli, Jean-Marc**
**38240 Meylan (FR)**

(74) Representative: **Grünecker Patent- und
Rechtsanwälte
PartG mbB
Leopoldstraße 4
80802 München (DE)**

(54) **ROBOT NAVIGATION BASED ON MULTI-TASK NEURAL COMBINATORIAL OPTIMIZATION**

(57) A method for robot navigation is disclosed, the method comprising receiving a backbone neural network, the backbone neural network having been trained to solve a set of robot navigation tasks comprising a first robot navigation task of optimizing a first path visiting a first number of first locations when considering first path costs. The method further comprises receiving a second robot navigation task, wherein the second robot navigation task comprises optimizing a second path visiting a second number of second locations when considering second path costs. The method further comprises configuring adapter layers for the backbone neural network for forming a neural network pipeline, wherein the adapter layers comprise a node adapter, an edge adapter and an output adapter. The method further comprises feeding the second locations and the second path costs to the neural network pipeline to determine a path for an autonomous machine based on the output.

FIG. 1

Processed by Luminess, 75001 PARIS (FR)

## Description

## Field

This invention relates to robot navigation (i.e., autonomous machine navigation), in particular, to a neural network approach for robot navigation tasks (i.e., autonomous machine navigation tasks) that require combinatorial optimization.

## Background

In many automation settings, autonomous machines, such as robots, are tasked with visiting a number of locations while carrying payloads from place to place. For efficient robot navigation, the robot's trajectory must be optimized while paying due consideration to various requirements such as maximum payload, maximal distance of travel before recharging, and time constraints. Such trajectory optimization often involves combinatorial optimization and is hence usually a hard computational problem. Traditional methods for addressing combinatorial optimization include exact solvers (Korte and Vygen, "Combinatorial Optimization: Theory and Algorithms", vol. 21 of Algorithms and Combinatorics, Springer-Verlag) and approximation algorithms (Vazirani, "Approximation Algorithms", Springer-Verlag). These approaches provide optimality or approximation guarantees, respectively, but do not scale to real-world applications. Hence, in practical terms, trajectory optimization today relies on diverse heuristic algorithms that generally produce good quality solutions and are fast (Boussaïd, Lepagnot, and Siarry, "A Survey on Optimization Metaheuristics", Information Sciences 237: 82-117). However, strong heuristic algorithms are generally problem-specific, so that for each class of combinatorial optimization problem a specific heuristic must be chosen.

Recently, neural constructive heuristics have been applied successfully to a variety of combinatorial optimization problems, including routing (Bello et al. "Neural Combinatorial Optimization with Reinforcement Learning", arXiv:1611.099402017; Nazari et al. "Reinforcement Learning for Solving the Vehicle Routing Problem", in: Advances in Neural Information Processing Systems, NeurIPS, vol. 31, 2018; Kool et al. "Attention, Learn to Solve Routing Problems!", in: International Conference on Learning Representations, ICLR, 2019; Kwon et al. "POMO: Policy Optimization with Multiple Optima for Reinforcement Learning", in: NeurIPS 2020), scheduling (Zhang et al. "Learning to Dispatch for Job Shop Scheduling via Deep Reinforcement Learning", in: NeurIPS 2020; Kwon et al. "Matrix Encoding Networks for Neural Combinatorial Optimization", in: NeurIPS 2022), and graph problems (Khalil et al. "Learning Combinatorial Optimization Algorithms over Graphs", NIPS 2017; Qiu et al. "DIMES: A Differentiable Meta Solver for Combinatorial Optimization Problems", in: NeurIPS 2022). However, these prior art approaches rely on training separate models for each type of navigation problem.

In other prior art, hybrid models are proposed, where neural models are improved with different techniques like beam search (Drakulic et al. "BQ-NCO: Bisimulation Quotienting for Generalizable Neural Combinatorial Optimization", arxiv:2301.03313, 2023), simulation-guided beam search (Choo et al. "Simulation-Guided Beam Search for Neural Combinatorial Optimization", in: NeurIPS 2022), MCTS (Fu et al. "Generalize a Small Pre-trained Model to Arbitrarily Large TSP Instances", Proceedings of the AAAI Conference on Artificial Intelligence, 35(8): 7474-7482), instance augmentation (Kwon et al. 2020, cited above), or active search (Hottung et al. "Efficient Active Search for Combinatorial Optimization Problems", in: ICLR 2022; Kwon et. al. 2022 cited above). However, all of these techniques introduce additional computational expense.

## Summary

In this disclosure, methods and systems for addressing robot navigation problems that include combinatorial optimization are proposed. The disclosed approach relies on using a single deep neural network architecture to learn heuristics for addressing multiple navigation problems. The proposed approach allows large parameter sharing across several combinatorial optimization tasks.

Accordingly, a method for robot navigation is disclosed. The method comprises receiving a backbone neural network, the backbone neural network having been trained to solve a set of robot navigation tasks comprising a first robot navigation task, wherein the first robot navigation task comprises optimizing a first path visiting a first number of first locations when considering first path costs. The method further comprises receiving a second robot navigation task, wherein the second robot navigation task comprises optimizing a second path visiting a second number of second locations when considering second path costs. The second locations may particularly be locations in an environment of an autonomous machine, and the second number may be different from the first number, e.g. much larger than the first number. The method further comprises configuring adapter layers for the backbone neural network for forming a neural network pipeline, wherein the adapter layers comprise a node adapter, an edge adapter, and an output adapter, wherein the node adapter is configured for receiving the second locations and providing a representation of the second locations to the backbone neural network, wherein the edge adapter is configured for receiving the second path costs and providing a representation of the second path costs to the backbone neural network, and wherein the output adapter is configured for receiving an intermediate solution of the second robot navigation task generated by the backbone neural network and for generating an output of the pipeline. The method also comprises feeding the second locations and the second path costs to the neural network pipeline to determine a path for the autonomous machine based on the output.

According to an embodiment, the method further comprises instructing the autonomous machine to move in the environment in accordance with the determined path.

According to aspects, the feeding the second locations and the second path costs to the neural network pipeline comprises iterating the neural network pipeline for the second number of times, wherein at each iteration the output selects a next location of the second locations. Further, instructing the autonomous machine to move in the environment in accordance with the determined path may include, in response to completing a first iteration of the neural network pipeline, instructing the autonomous machine to start moving to the location selected in the first iteration of the neural network pipeline.

According to other embodiments, the first path costs are according to an Euclidean metric for distances between the first locations, wherein the second path costs do not conform to any Euclidean metric.

According to yet other embodiments, the first robot navigation task is an instance of a first combinatorial optimization problem, and the second robot navigation task is an instance of a second combinatorial optimization problem different from the first combinatorial optimization problem. The method may further comprise performing few-shot training of the node adapter, the edge adapter, and the output adapter to adjust the neural network pipeline to solve the second robot navigation task. In particular embodiments, while performing the few-shot training, parameters of the backbone neural network are frozen, wherein the performance of the few-shot training is based on imitation learning based on an algorithm for solving instances of the second combinatorial optimization problem or is based on reinforcement learning.

According to specific embodiments, the second combinatorial optimization problem is the Maximum Coverage Location Problem.

Moreover, a method of training neural network pipeline for robot navigation is disclosed, the method comprising generating a plurality of training data sets, wherein each training data set corresponds to a robot navigation task of a plurality of robot navigation tasks. The generation of a training data set of the plurality of training data sets comprises generating a number of training samples of the respective robot navigation task and solving the training samples by an algorithm for the respective robot navigation task. The method further comprises training a plurality of neural network pipelines with the plurality of training data sets, wherein all neural network pipelines share a backbone neural network, wherein each neural network pipeline further comprises a task-specific node adapter, a task-specific edge adapter, and a task-specific output adapter.

According to an aspect, the backbone neural network comprises a predefined number of layers, wherein each layer comprises a mixed-score self-attention block, wherein the mixed-score self-attention block is configured to combine a node representation, a mask, and an edge representation, wherein the mask is provided by a masking block and the edge representation is provided by the task-specific edge adapter.

In addition, a computer-readable medium is disclosed, the computer-readable medium comprising instructions that, when executed by a processing unit, cause the processing unit to perform one of the disclosed methods.

Further, an autonomous machine is disclosed, the machine comprising position sensors, means of propulsion, a processing unit, and a memory unit connected to the processing unit. The memory unit stores a plurality of trained neural network pipeline corresponding to a plurality of machine navigation tasks (also referred to herein as robot navigation tasks), wherein the trained neural network pipeline comprises a shared backbone neural network and task-specific adapter layers. The position sensors may be configured to provide a current position of the machine to the processing unit.

In particular embodiments, the autonomous machine may be tasked with visiting a plurality of locations before returning to a depot. The processing unit may be configured for providing instructions to the means of propulsion for moving the machine along a motion path or flight path as determined in accordance with the embodiments described above. In further embodiments, the machine may further comprise means for transporting a payload, and the machine may be tasked with one or more of delivering a plurality of payloads from a depot to a plurality of locations, delivering a plurality of payloads from a depot to a plurality of locations, wherein for each location, one or more of the payloads has to be delivered within a specific time window, transporting a plurality of payloads from a plurality of locations to a depot, and selecting one or more payloads from a plurality of payloads to maximize a metric value of the one or more payloads while taking into account a maximum load of the machine.

**Brief description of the Figures**

The accompanying drawings are incorporated into the specification for the purpose of explaining the principles of the embodiments. The drawings are not to be construed as limiting the invention to only the illustrated and described embodiments or to how they can be made and used. Further features and advantages will become apparent from the following and, more particularly, from the description of the embodiments as illustrated in the accompanying drawings, wherein:

**Figure 1** illustrates a neural network pipeline for robot navigation;

**Figure 2** illustrates a backbone neural network according to embodiments;

**Figure 3** illustrates a mixed score self-attention block employed in a backbone neural network according to embodiments;

**Figure 4** illustrates a method of training neural network pipelines for robot navigation according to embodiments;

**Figure 5** illustrates a method of configuring neural network pipelines for robot navigation according to embodiments;

**Figure 6** reproduces performance results of the disclosed model for the Maximum Covering Location Problem; and

**Figure 7** illustrates an exemplary system in which the disclosed methods may be applied;

**Detailed description**

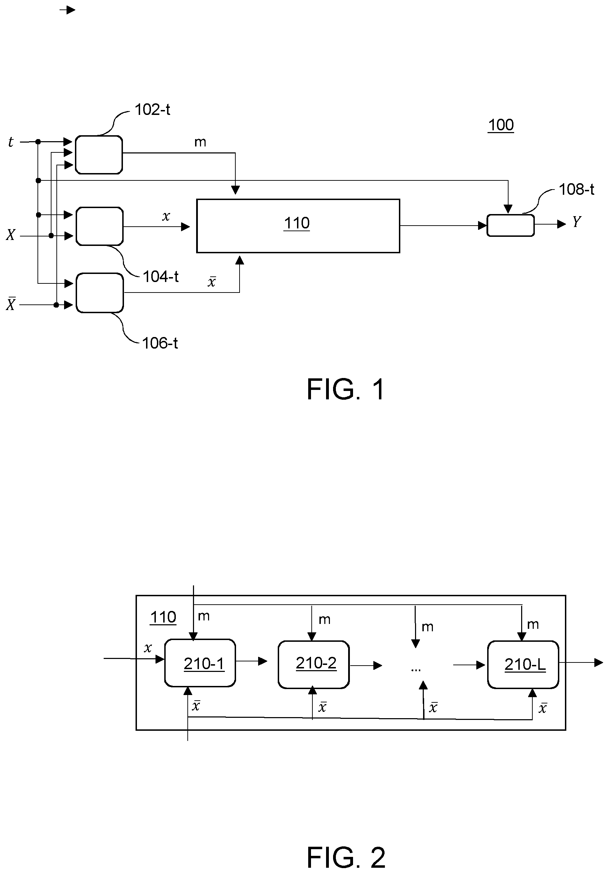

**Figure 1** illustrates a pipeline 100 of neural networks for solving a plurality of tasks t for robot trajectory optimization. Each task t falls under a type of combinatorial optimization problem. Such problems involve a set of N nodes, typically referring to locations. Technical properties of the task are assigned to features, which can be attached at node, edge, or task level. In pipeline 100, task-specific node adapter 104-t and task-specific edge adapter 106-t feed their output to backbone neural network 110, which is shared by all tasks t.

Backbone neural network 110 generates an intermediate representation of the solution of task t, which is translated to a solution of the task t by task-specific output adapter 108-t. The underlying assumption is that if the tasks are sufficiently similar, learning one task elicits implicit skills useful to other tasks, which are then leveraged by parameter sharing by virtue of backbone neural network 110. As explained in detail below, pipeline 100 is trained to imitate the results of oracle algorithms.

In pipeline 100, task t is represented by $(X, \overline{X})$, where $X$ is a matrix of shape $\langle N, F_t \rangle$ representing nodes. The number $F_t$ is the dimension of feature vectors assigned to each node. It is assumed that each node has a node identifier, randomly assigned value between 0 and 1, so that $F_t \geq 1$, always. Typical node features relate to the operations to be performed at that node, e.g., a demand of cargo at this node. Node features may also include global task features which are replicated at each node. For example, such node features may be a remaining payload capacity of the robot or a remaining distance that can be travelled before the next charging. In pipeline 100, $X$ is provided to node adapter 104-t. Node adapter 104-t is configured to map input $X$ into a common embedding space, yielding a tensor of shape $\langle N, D \rangle$, where $D$ does not depend on t. Node adapter 104-t is hence specific to task t. The term $\overline{X}$ is of shape $\langle N, N, \overline{F}_t \rangle$ and represents edge features for N×N edges between the nodes, which in concrete terms are paths between locations. Typical edge features represent costs of travelling along the edges. When no edge features are available for a task, $\overline{F}_t = 0$. In pipeline 100, $\overline{X}$ is provided to edge adapter 106-t. Edge adapter 106-t is specific to task t and is configured to map input $\overline{X}$ into a common embedding space, yielding a tensor of shape $\langle N, N, \overline{D} \rangle$, where $\overline{D}$ does not depend on t.

Backbone neural network 110 generates an intermediate representation of a solution of task $t$. The intermediate representation is provided to output adapter 108-t to be transformed to a task-specific solution. Concretely, output adapter 108-t generates a matrix $Y$ of shape $\langle N, K_t \rangle$, which forms an action score matrix predicted by the pipeline 100.

Masking block 102-t generates a mask employed for iterative construction of a solution to task t. Masking block 102-t is a parameter-free module which masks the last of the already visited nodes and the destination node. In the proposed approach, only the last of the already visited nodes and the non visited nodes are needed to determine the next node, which cannot be the last visited node nor the destination node, hence the need to mask these two nodes. Nodes which have already been visited in the robot path, except the last one, are simply dropped altogether.

Pipeline 100 thereby achieves a stepwise construction procedure of a solution of task $t$ by exploiting tail-recursivity of the combinatorial optimization problem. The claimed approach hence frames the combinatorial optimization problem as a deterministic Markov chain. Each partial solution of task $t$ is obtained by a sequence of discrete construction steps, each according to a Markov decision problem. In particular, only a current state of already selected locations for the robot path are needed for choosing the next position.

By sharing backbone neural network 110 among all tasks and employing lightweight task-specific neural networks 104-t and 106-t, and 108-t, pipeline 100 provides for a multi-task solution across many combinatorial optimization problems. With a high number of shared parameters, pipeline 100 is able to be fine-tuned to new tasks with little training expense. In particular, only the lightweight neural networks 104-t, 106-t, and 108-t have to be adjusted during fine-tuning for specific tasks. Significantly, adapters 104-t, 106-t, and 108-t are not intertwined into the weights of backbone neural network 110, but are completely separate from backbone neural network 110.

Task t can in particular be an instance of the traveling salesman problem, such that the objective is to find the shortest possible route that the robot can take to visit a given set of locations exactly once and return to its starting point. In this disclosure, the travelling salesman problem is treated in a variant in which the origin and destination of the salesman are treated as distinct but, potentially, having the same coordinates. In the context of the present application, the traveling salesman problem is addressed even in a non-Euclidean context, where time or energy rather than distance is represented. Accordingly, when task t is an instance of the travelling salesman problem, the node features are a node identifier, a first binary value indicating whether the node is the origin, and a second binary value indicating whether the node is the destination. Hence, $F_t = 3$ for instances of the travelling salesman problem. For edges, there is a feature holding the quantity which characterizes the contribution of the edge to the objective to minimize, e.g. distance, time, or energy so that $\overline{F}_t = 1$.

Task t may also be an instance of the orienteering problem that involves finding the optimal route to maximize scores of collected goods when visiting a set of locations under a maximal distance constraint. Task t may also be a knapsack problem, which involves selecting, e.g. as the payload of the robot, a subset of items from a given set while paying consideration to a maximum load of the robot.

Task t may also fall under combinatorial optimization problems which are relevant for fleets of machines. For example, the task may relate to the capacitated vehicle routing problem with the objective to optimize delivery routes of a fleet of robots to a set of locations, while considering each robot's maximum load. This problem can also be considered with time constraints so that for every location, there is a specified time window when a robot should be at the location along with a time to be spent at the location. According to yet another embodiment, the minimum vertex cover problem is covered, where the goal is to find the smallest set of vertices in a graph, such that each edge is incident to at least one of these vertices. In a weighted version of the minimum vertex cover problem, each vertex has an associated weight, and the goal is to select vertices with the minimum cumulated sum of weights while satisfying a vertex cover condition. Finally, task t can be an instance of the maximum coverage location problem. In this problem, a set of locations with associated weights and radius of coverage of each robot is given. The goal is then to find an optimal placement of robots on a subset of the locations that maximizes the total sum of the weights of the covered locations.

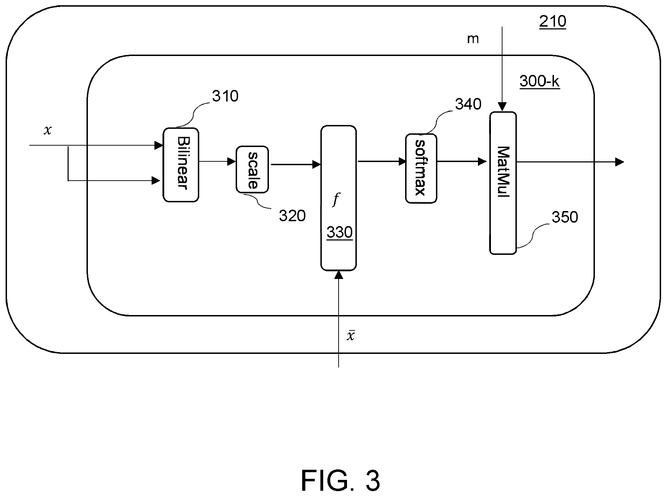

**Figure 2** illustrates a structure of backbone neural network 110. Backbone neural network 110 comprises layers 210-1, ... , 210-L. At the first layer 210-1, input from node adapter 104-t is received. Layer 210-1 is followed by layer 210-2 and further subsequent layers 210-3,..., until final layer 210-L. Each layer 210-1, ... , 210-L receives a mask set by masking block 102-t, and output of the edge adapter 106-t. Each layer 210-1, ... , 210-L combines these input features according to an attention mechanism, which will be explained below with reference to Figure 3. Except for the different attention mechanism, layers 210-1, ... , 210-L are usual Transformer layers. Output of the final layer 210-L forms an intermediate solution of the task t, to be provided to output adapter 108-t. In embodiments, additional adapters in between layers 210-1, ... , 210-L can be applied.

**Figure 3** illustrates a structure of a layer 210 of backbone neural network 110. Layer 210 has embedding dimensions $D$ and $\overline{D}$ and is based on the self-attention layer of the transformer (e.g., Vaswani et al. "Attention is all you need", in: I. Guyon, U. V. Luxburg, S. Bengio, H. Wallach, R. Fergus, S. Vishwanathan, and R. Garnett, editors, Advances in Neural Information Processing Systems 30, pages 5998-6008, Curran Associates, Inc., 2017). However, instead of usual Transformer attention, a multi-head mixed score self-attention head 300-k is employed, as described in Kwon et al. 2022, cited above. The disclosure of Kwon et al. 2022 is included herewith in its entirety. As in the usual Transformer model, mixed score self-attention head 300-k is one of several parallel attention heads 300-k, k=1,...,K forming a multi-head attention layer. Mixed score self-attention head 300-k takes three inputs, the node representation $x$ of shape $\langle N, D \rangle$, a mask m of shape $\langle N,N \rangle$, and an edge representation $\overline{x}$ of shape $\langle N,N,\overline{D} \rangle$. The mixed score self-attention block 300-k outputs a new node representation of shape $\langle N, D/K \rangle$. The behavior varies the standard multi-head self-attention based on $x$ and the mask m, in which $\overline{x}$ is integrated.

In more detail, bilinear product block 310 of layer L receives node representation $x$, either from node adapter 104-t, when L=1, or from the previous layer L-1. Output of bilinear product block 310 is fed to scaling block 320, whose output is provided to trainable element-wise function block 330. In embodiments, trainable element-wise function block 330 is a perceptron. Trainable element-wise function block 330 also receives edge representation $\overline{x}$. Output of trainable element-wise function block 330 is provided via softmax block 340 to matrix multiplication block 350, along with the mask m.

The action of a mixed score self-attention blocks 300-k can be represented as

$$\overline{A}_{k} = f\left((x\Lambda_k x^{T})|\overline{x}; \mu_k\right) \tag{1}$$

$$A_k = \text{softmax}_{\text{col}}(\overline{A}_k + m) \tag{2}$$

As is evident from Eq. (1)-(2), the attention matrix $A_k$ is obtained as in the standard case by taking the column-wise softmax of an attention score matrix $\overline{A}_k$ of shape $\langle N,N \rangle$, summed with the mask m. Mask values m are either 0 or $-\infty$. But whereas the standard $\overline{A}_k$ is directly given by the bilinear product $x\Lambda_k x^T$, mixed score self-attention block 300-k first stacks $x\Lambda_k x^T$ with the edge representation x to obtain a tensor of shape $\langle N,N,\overline{D}+1 \rangle$, which is then passed edgewise to trainable element-wise function block 330, represented by function f which is parametrized by $\mu_k$. Trainable element-wise function block 330 may, for example, be a perceptron with parameters $\mu_k$. Trainable element-wise function block 330 has input size $\overline{D}+1$ and parameters $\mu_k$. Thus, the score matrix $\overline{A}_k$ generated by element-wise function block 330 is again of shape $\langle N,N \rangle$, but incorporates the edge information $\overline{x}$.

The output of all parallel mixed score self-attention blocks 300-k is summed according to

$$y = \sum_k A_k^\top x \, \theta_k \qquad\qquad (3)$$

Hence, each mixed score self-attention head 300-k has three trainable parameters, $\mu_k, \theta_k$ and $\Lambda_k$. The parameters $\theta_k$ and $\Lambda_k$ match parameters of the usual Transformer attention layer. In particular, $\Lambda_k$ decomposes as $\Lambda_k^{\text{key}}$ and $\Lambda_k^{\text{query}}$ using the key and query projection matrices of shape $\langle N, {}^D/{}_K \rangle$, and $\theta_k$ composes in the same manner. This decomposition is used in mixed score self-attention blocks 300-k as well, but does not affect equations (1)-(3).

According to embodiments, task-specific greedy heuristics are applied to avoid the quadratic complexity bottleneck of attention matrices. Thus, instead of presenting all the N nodes of the input instance to the model, the heuristic selects a priori a subset of n most promising ones. Thus, the attention matrices never exceed size n × n, even when N × N would be unmanageable. For the travelling salesman problem, for example, only the origin, destination, and 100 nearest neighbors to the origin are presented. Such pre-selection criteria can be defined for each task, as explained below.

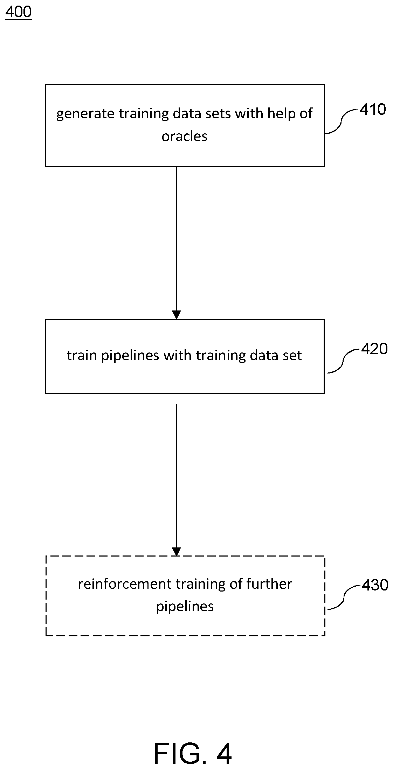

**Figure 4** illustrates a flowchart of a training method 400 of neural network pipelines for robot navigation.

Method 400 comprises step 410 of generating a plurality of training data sets, wherein each training data set corresponds to an associated robot navigation task, wherein the robot navigation task is a tail-recursive path optimization problem. Step 410 may comprise generating a number of instances of the associated robot navigation task and solving each instance of the associated robot navigation tasks by an oracle, i.e. a specific algorithm for the associated robot navigation task.

Step 420 comprises training neural network pipelines comprising task-specific node input adapters, task-specific edge input adapters, the backbone neural network, and task-specific output adapters with the training data sets. Specifically, each training data set is employed for training a pipeline specific for the associated robot navigation task, while all the neural network pipelines share the backbone neural network. Steps 410 and 420 hence achieve imitation learning based on the oracle for the associated robot navigation tasks. The backbone neural network is hence trained for different tasks by virtue of task-specific adapters. Because the robot navigation tasks are sufficiently similar, training the neural network pipelines on the tasks has a synergistic effect on the backbone neural network because learning one task elicits implicit skills useful to other tasks.

Alternatively or additionally, when training for robot navigation tasks for which no viable oracle algorithm is available, method 400 may comprise step 430 of reinforcement training of the neural network pipelines for these tasks. To apply reinforcement training, standard methods for learning Markov Decision Problems such as DQN or policy gradients, as explained in Sutton and Barto, "Reinforcement Learning: An Introduction", MIT Press, 2018. Specifically, applying reinforcement training may be advantageous to train the pipelines for specific problem variants for which the available oracle algorithms are not adapted.

As a result of method 400, a backbone neural network for multi-task robot navigation is obtained. The backbone neural network is ready to be fine-tuned on the fly to a specific robot navigation task.

In a concrete embodiment, the model is implemented with 8 layers, an embedding size of 96, and a feed-forward dimension of 512. The attention block may be implemented with 6 attention heads. Mixing with edge features may be performed through an MLP block with a hidden size of 16. The node and edge adapters may be implemented as MLP blocks with 4 hidden dimensions.

Table 1

| | (A)TSP | (A)CVRP | (A)CVRPTW | OP | KP | nawvc | MCLP |
|---|---|---|---|---|---|---|---|
| Node features | - | demand | demand, time window, service time | price | price, weight | weight | weight |

(continued)

| | (A)TSP | (A)CVRP | (A)CVRPTW | OP | KP | nawvc | MCLP |
|---|---|---|---|---|---|---|---|
| Edge features | (a)symmetric distance matrix | (a)symmetric distance matrix | (a)symmetric distance matrix | symmetric distance matrix | - | adjacency matrix | symmetric distance matrix |
| Instance features | - | vehicle capacity | vehicle capacity | max. tour length | knapsack capacity | - | number of facilities, radius of coverage |
| Solution | sequence of nodes (tour) | set of tours | set of tours | tour | set of nodes | set of nodes | set of nodes |
| Oracle | Concorde (LKH3) | LKH3 (HGS) | HGS | EA4OP | ORTools | FastWVC | Pulp/CBC |
| AM | Euclidean | Euclidean | | ✓ | | | |
| POMO | Euclidean | Euclidean | | | ✓ | | |
| MDAM | Euclidean | Euclidean | | ✓ | | | |
| SymNCO | Euclidean | Euclidean | | ✓ | | | |
| BQNCO | Euclidean | Euclidean | | | ✓ | | |
| S2V-DQN | Euclidean | | | | | | non-weighted |
| MatNet | ✓ | | | | | | |
| GOAL ours | ✓ | ✓ | ✓ | ✓ | ✓ | ✓ | ✓ |

The example model was trained for the seven combinatorial optimization problems listed in Table 1, the Traveling Salesman Problem (TSP), the Capacitated Vehicle Routing Problem (CVRP), CVRP with time windows (CVRPTW), the Orienteering Problem (OP), the Knapsack Problem (KP), the Minimum Weighted Vertex Covering Problem (MWVC), and the Maximum Covering Location Problem (MCLP). For the problems TSP, CVRP, and CVRPTW asymmetric variants ATSP, ACVRP, and ACVRPTW are additionally considered, in which edge information is not in accordance with an Euclidean metric. In such cases, the edge features according to an Euclidean distance matrix were further augmented with a matrix of random values between 0 and 0.1.

In more, detail, for CVRP, the node features may be a random node index, a Boolean value "is origin", a Boolean value "is destination", a demand, and a remaining capacity. In CVRP, visits to the depot are represented as a "via point". The pipeline is trained to select a pair of a single node and an indicator whether it should be reached via the depot or directly. For CVRPTW, the node features may in addition include service time, time window start, time window end and departure time.

For OP, node features may be a random node index, Boolean values "is origin" and "is destination", a value, and a remaining tour length. For TSP, CVRP, CVRPTW, and OP, the edge features may be according to an Euclidean distance, and a node preselection criterion may be based on the Euclidean distance from the origin. For KP, the node features may include a random node index, a weight, a value, and a remaining capacity, and edges may be defined by an adjacency matrix value. The node preselection criterion may be based on a value over weight ratio. For MWVC, node features may include a random node index and a weight, the edges may be defined by an adjacency matrix value, and a node preselection criterion may be chosen as a weight over node degree ratio. For MCLP, node features may include a random node index, a weight, and a radius, and the edges may be defined by an Euclidean distance, while the node preselection criterion may be based on weight.

The example model was trained using alternating batches for each problem, using cross-entropy loss. For TSP, CVRP, CVRPTW, and OP, single-class cross entropy loss was employed, while for KP and MWVC multi-class cross entropy loss was employed. Following the approach of Drakulic et al 2023, cited above, suffix sub-problems are sampled for each instance. The disclosure of Drakulic et al 2023 is included herewith in its entirety. For optimization, the Adam optimizer with an initial learning rate of 0.0005 and a decay rate every 20th epochs was applied. The total training process spanned approximately 400 epochs. For all problems, training batches were sized 256 samples.

Significantly, as indicated in Table 1, no existing neural combinatorial optimization model can handle all of the combinatorial optimization problems listed in Table 1 by a single approach.

Table 1 also lists the algorithms (also called oracles) used for imitation training. These algorithms include Concorde (Applegate et al. "Concorde TSP Solver", 2015), LKH (Helsgaun, "An Extension of the Lin-Kernighan-Helsgaun TSP Solver for Constrained Traveling Salesman and Vehicle Routing Problems", Technical report, Roskilde University, 2017), HGS (Vidal, "Hybrid Genetic Search for the CVRP: Open-source Implementation and SWAP* Neighborhood", Computers & Operations Research, 140: 105643, 2022), EA4OP (Kobeaga et al. "An Efficient Evolutionary Algorithm for the Orienteering Problem", Computers & Operations Research, 90: 42-59, 2018), ORTools (Didier et al. "OR-Tools: Vehicle Routing Solver: a Generic Constraint-Programming Solver with Heuristic Search for Routing Problems", Google research, 2023), Fast-WVC (Cai et al. "Towards faster local search for minimum weight vertex cover on massive graphs", Information Sciences, volume 471, 2019, pages 64-79, https://github.com/kjcm150/fastwvc), and Coin-or/cbc: Release Releases/2.10.11 (https://zenodo.org/records/10041724, John Forrest, et al. 2023).

The bottom rows of Table 1 list prior art models, each capable of solving some of the combinatorial optimization problems. The prior art models include AM (Kool et al., cited above), MDAM (Xin et al. "Multi-Decoder Attention Model with Embedding Glimpse for Solving Vehicle Routing Problems", Proceedings of the AAAI Conference on Artificial Intelligence, 35(13): 12042-12049), POMO (Kwon et al. 2020, cited above), Sym-NCO (Kim et al. Sym-NCO: "Leveraging Symmetricity for Neural Combinatorial Optimization", in: NeurIPS 2022) and BQ- NCO (Drakulic et al. 2023, cited above).

As indicated by the checkmarks, none of the prior art models is capable of solving all tasks addressed by the disclosed model. Further, for the problems TSP, CVRP, and CVRPTW, most prior art is incapable of considering non-Euclidean settings. Moreover, all prior art models are trained in single-task mode. It is to be noted that there is only one neural combinatorial optimization model solver for CVRPTW, namely JAMPR (Falkner and Schmidt-Thieme, "Learning to Solve Vehicle Routing Problems with Time Windows through Joint Attention", arXiv:2006.09100), while for MWVC there seems to be no existing neural combinatorial optimization approach.

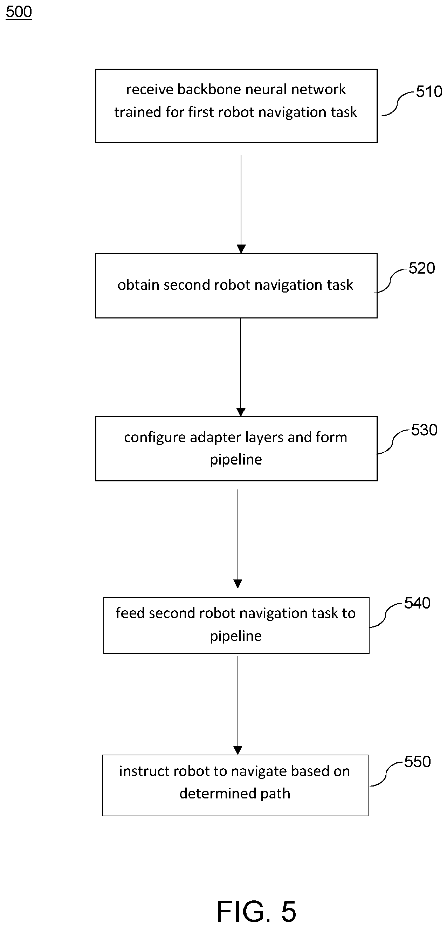

**Figure 5** illustrates a flowchart of a method 500 for robot navigation (i.e., machine navigation). Method 500 may e.g. be performed by a robot that may be part of a fleet of robots configured to perform tasks in a particular environment. For example, the robots may be deployed in an automatic warehouse, a plant, or an automated indoor farm and may be tasked with carrying payloads in such environments.

Method 500 comprises step 510 of receiving backbone neural network 110. Backbone neural network 110 has been trained together with dedicated adapters as explained above in the context of solving a set of robot navigation tasks (i.e., machine navigation tasks).

Method 500 comprises step 520 of obtaining a robot navigation task. The robot navigation task comprises optimizing a path visiting a number of locations of an environment of the robot, when considering path costs for paths between the locations. The number of locations may be different to the number of locations employed when training the backbone neural network 110. The robot navigation task may also differ in other respects from robot navigation tasks on which the backbone neural network 110 has been trained, e.g. in involving path cost which is not according to an Euclidean metric. Considering non-Euclidean cost is very relevant in real-world situations in which e.g. a road has obstacles in one direction but not the other direction. In real-world situations, in particular, the path cost often do not satisfy the triangle inequality.

Method 500 further comprises step 530 of configuring adapter layers for the backbone neural network for forming a neural network pipeline. For example, adapter layers suitable for the received robot navigation task may be selected from a plurality of adapter layers according to a type of the robot navigation task. Further, the selected adapter layers, including a node adapter, an edge adapter and an output adapter may be adjusted based on the number of locations of the received task. Further, the selected adapter layers may be adjusted to consider a maximal payload or a maximal distance of travel for the robot. Step 530 may also include few-shot training of the selected adapter layers when the robot navigation task is an instance of a combinatorial optimization problem on which the backbone neural network 110 has not been trained. Few-shot training may involve training only the adapter layers while keeping parameters of the backbone neural network 110 frozen.

Method 500 comprises step 540 of feeding the robot navigation task to a pipeline comprising the adjusted node adapter, edge adapter and adjusted output adapter. After a first iteration of the pipeline, a first location for robot navigation is determined. In a second iteration, the first location is masked to determine a second location. Over a plurality of iterations, the whole robot path visiting all locations defined in the task is obtained.

Method 500 may comprise step 550 of instructing the robot to move in accordance with the determined robot path. In embodiments, the robot can be instructed to navigate to the first location as soon as the first iteration of the pipeline is completed. In such embodiments, steps 540 and 550 are performed concurrently.

**Table 2**

| | | Test (128 instances) N=100 | | Generalization to larger size (128 instances) | | | | | |
| | | | | N=200 | | N=500 | | N=1000 | |
| | | opt. gap | time | opt. gap | time | opt. gap | time | opt. gap | time |
|---|---|---|---|---|---|---|---|---|---|
| | Concorde | 0.00% | 29s | 0.00% | 2m | 0.00% | 40m | 0.00% | 2.5h |
| | OR-Tools | 3.76% | 50s | 4.52% | 4m | 4.89% | 31m | 5.02% | 2.4h |
| TSP | AM greedy | 4.33% | < 1s | 8.30% | <1s | 20.99% | < 1s | 34.74% | <1s |
| | MDAM greedy | 2.21% | 1.2s | 5.86% | 5.4s | 18.21% | 20.9s | 32.12% | 20.9s |
| | POMO no aug | 0.37% | 1.1s | 2.21% | 1.6s | 24.32% | 28.4s | 42.3% | 1.1m |
| | Sym-NCO greedy | 1.19% | 3s | 4.75% | <1s | 29.97% | 3s | 46.05% | 1.2m |
| | BQ-NCO greedy | 0.59% | 2s | 0.79% | 5s | 1.42% | 1.3m | 2.33% | 7.2m |
| | **GOAL greedy** | 1.29% | 3.1s | 1.99% | 8.5s | 4.00% | 27s | 6.26% | 1.0m |
| CVRP | LKH | 0.00% | 15.3h | 0.00% | 30m | 0.00% | 1.3h | 0.00% | 2.8h |
| | HGS | -0.51% | 15.3h | -1.02% | 30m | -1.25% | 1.3h | -1.10% | 2.8h |
| | OR-Tools | 9.62% | 11.7m | 10.70% | 3m | 11.40% | 18m | 13.56% | 43m |
| | AM greedy | 7.11% | <1s | 10.16% | < 1s | 17.2% | < 1s | 72.95% | 2.ls |
| | MDAM greedy | 4.84% | 1.1s | 7.54% | 6.5s | 12.94% | 24.7s | 32.25% | 1.5m |
| | POMO no aug | 1.21% | 1.1s | 5.94% | 6.6s | 31.36% | 32.4s | 284.58% | 1.4m |
| | Sym-NCO greedy | 3.33% | <1s | 8.42% | 3s | 37.58% | 54s | 481.53% | 8.8m |
| | BQ-NCO greedy | 4.83% | 1s | 3.72% | 5s | 3.42% | 1.3m | 6.81 % | 7.2m |
| | **GOAL greedy** | 4.03% | 2.8s | 3.95% | 8.5s | 4.62%, | 29.4s | 8.27% | 1.0m |
| CVRPTW | HGS 1m | 0.00% | 2.1h | 0.00% | 2.1h | 0.00% | 2.1h | 0.00% | 2.1h |
| | HGS 1s | 108/128 | 2.1m | 14/128 | 2.1m | 0/128 | 2.1m | 0/128 | 2.1m |
| | **GOAL greedy** | 7.35% | 2.8s | 11.32% | 8.8s | 14.36% | 31s | 12.76% | 1.1m |
| or | EA4OP | 0.00% | 1.1m | 0.00% | 3m | 0.00% | 11m | 0.00% | 45m |
| | AM greedy | 5.35% | 5s | 11.05% | <1s | 22.29% | <1s | 30.73% | <1s |
| | MDAM greedy | 2.88% | 16s | 5.55% | <1s | 18.31% | 4s | 30.05% | 15s |
| | SymNCO greedy | 2.03% | 2s | 6.60% | <1s | 19.81% | 1s | 31.79% | 1.2m |
| | **GOAL greedy** | 0.66% | 2.4s | 2.45% | 9.8s | 5.09% | 16.2s | 10.83% | 32.5s |
| KP | ORTools | 0.00% | < 1s | 0.00% | < 1s | 0.00% | < 1s | 0.00% | < 1s |
| | POMO single traj. | 0.19% | <1s | 0.50% | 1s | 6.41% | 31.2s | 5.34% | 1.2m |
| | BQ-NCO greedy | 0.10% | 2.3s | 0.14% | 6.4s | 0.74% | 7.5s | 0.92% | 13.1s |
| | **GOAL greedy** | 0.15% | 2.3s | 1.55% | 5.9s | 2.40% | 7.8s | 2.59% | 13.2s |

(continued)

| | | Test (128 instances) | | Generalization to larger size (128 instances) | | | | | |
| | | N=100 | | N=200 | | N=500 | | N=1000 | |
| | | opt. gap | time | opt. gap | time | opt. gap | time | opt. gap | time |
|---|---|---|---|---|---|---|---|---|---|
| MWVC | nuMVC | 0.00% | 2.1m | 0.00% | 2.6m | 0.00% | 3.3m | 0.00% | 3.4m |
| | **GOAL greedy** | 0.26% | 2.4s | 2.03% | 8.3s | 3.84% | 26.3s | 3.00% | 57.6s |

Table 2 lists test results of the model trained on six of the combinatorial optimization problems TSP, CVRP, CVRPTW, OP, KP, and MWVC. The objective of Table 2 is to demonstrate that, compared with the state of the art, similar performance can be reached on a variety of problems by a single model.

The results of Table 2 were generated using 1 million training instances with node size 100. For TSP, CVRP, CVRPTW, and OP, training instances had nodes randomly placed in a unit square, and edge information given by the Euclidean distance between nodes. It must be noted that in the disclosed approach node coordinates are not passed as features. For MWVC, the adjacency matrix is generated by an Erdő s-Renyi process, while the KP problem has no edge information. Table 2 includes results on testing with the same number of nodes as during training, N=100, as well as results for generalizing to larger node numbers, N=200, 500, and 1000. All tests were performed on 10,000 instances. The reported performance numbers are average gap with respect to the oracles and the prior art approaches, which mostly give exact optima, so the gap indicated in Table 2 mostly is the true optimality gap.

As shown by the "time" columns in Table 2, the invention holds advantages when a quick solution is required. Classic heuristics, in contrast, often struggle to find a feasible solution within a short time budget. Hence, the availability of quick solutions renders the system very suitable in the context of robot trajectory planning.

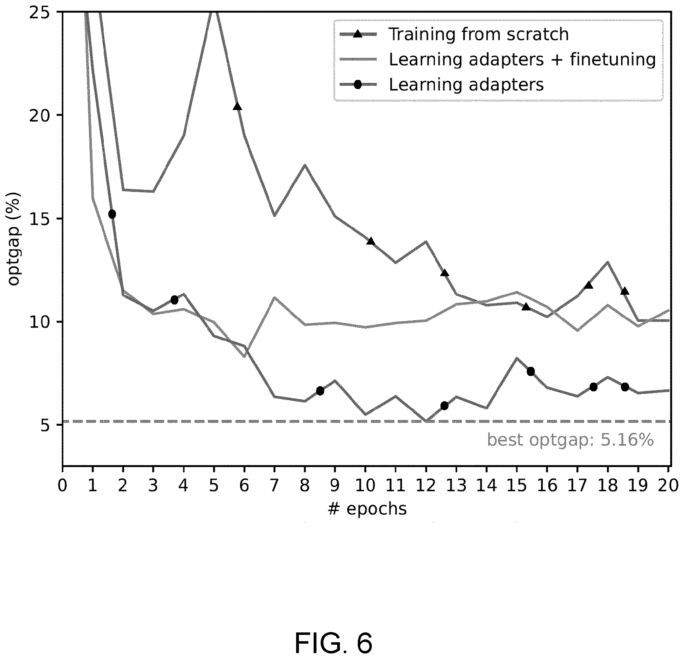

**Figure 6** shows results of studying generalization of the disclosed model to an unseen task. As unseen task, MCLP was selected, which falls under the category of covering location problems and is thus rather different from the other problems which are routing and graph problems. Firstly, a pipeline was trained from scratch for MCLP only. Secondly, a model was trained on the tasks of Table 1, but not on MCLP. Task-specific adapters 104-t, 106-t, 108-t for MCLP were then trained on a small set of 10,000 instances, either by keeping backbone neural network 110 fixed or by allowing backbone neural network 110 to be fine-tuned at the same time as the adapters 104-t, 106-t, 108-t are trained. As can be inferred from Figure 6, with just 12 epochs of adapter training and without fine-tuning the backbone, the system reaches an optimality gap of 5.16% in only 18 minutes. As is evident in Figure 6, fine-tuning backbone neural network 110 at the same time as training the adapters does not seem to be beneficial. Further, training from scratch converges much slower, which demonstrates the synergistic effect of training the backbone neural network on multiple combinatorial optimization problems.

Table 3

| | | Generalization to asymetric routing problems (128 inst.) | | | | | | | |
| | | N=100 | | N=200 | | N=500 | | N=1000 | |
| | | opt. gap | time | opt. gap | time | opt. gap | time | opt. gap | time |
|---|---|---|---|---|---|---|---|---|---|
| ATSP | LKH | 0.00% | 18m | 0.00% | 29s | 0.00% | 2.3m | 0.00% | 9.4m |
| | MatNet greedy | 1.57% | 34s | 97.21% | 12.1s | - | - | - | |
| | **GOAL greedy** | 1.63% | 2.8s | 1.55% | 8.6s | 4.29% | 26.1s | 8.09% | 1.1m |
| ACVRP | HGS 1m | 0.00% | 2.1h | 0.00% | 2.1h | 0.00% | 2.1h | 0.00% | 2.1h |
| | HGS 1s | 118/128 | 2.1m | 82/128 | 2.1m | 21/128 | 2.1m | 3/128 | 2.1m |
| | **GOAL greedy** | 5.77% | 2.8s | 5.08% | 8.7s | 4.23% | 28.2s | 7.00% | 1.1m |
| ACVRPTW | HGS 1m | 0.00% | 2.1h | 0.00% | 2.1h | 0.00% | 2.1h | 0.00% | 2.1h |
| | HGS 1s | 116/128 | 2.1m | 9/128 | 2.1m | 1/128 | 2.1m | 0/128 | 2.1m |
| | **GOAL greedy** | 8.41% | 3.2s | 12.68% | 10s | 15.00% | 21.6s | 15.38% | 1.1m |

**Table 3** lists results of the generalization of the systems to new instance types not seen during training, in particular, to instances types according to a non-Euclidean setting. To study performance on new instance types, instances of ATSP, ACVRP, and ACVRPTW were generated in which the edge features according to an Euclidean distance matrix were further augmented with a matrix of random values between 0 and 0.1. This approach ensures a form of correlation between the matrix values that is often the case in practice when e.g. the matrix represents travel times rather than distance. This implies that matrices are asymmetric and that, in particular, the triangle inequality is not satisfied. The majority of prior art approaches for combinatorial optimization have focused on solving Euclidean versions of the problems based on node coordinates. This is however a significant limitation in applications in real-world scenarios, such as robotics.

In Table 3, a comparison is made whenever a prior art approach is capable of dealing with such non-Euclidean configurations. MatNet (Kwon et al. 2022, cited above) can directly handle distance matrices and hence can be employed for non-Euclidean problems. However, as shown in Table 3, MatNet does not at all generalize to larger numbers of nodes.

As proven in Tables 2-3 and Figure 6, the disclosed approach exhibits excellent flexibility over a diverse set of combinatorial optimization problems at a performance which is in line with the existing task-specific models which are designed and trained for the specific tasks. In addition, the disclosed approach allows much better generalization on problem size than existing models.

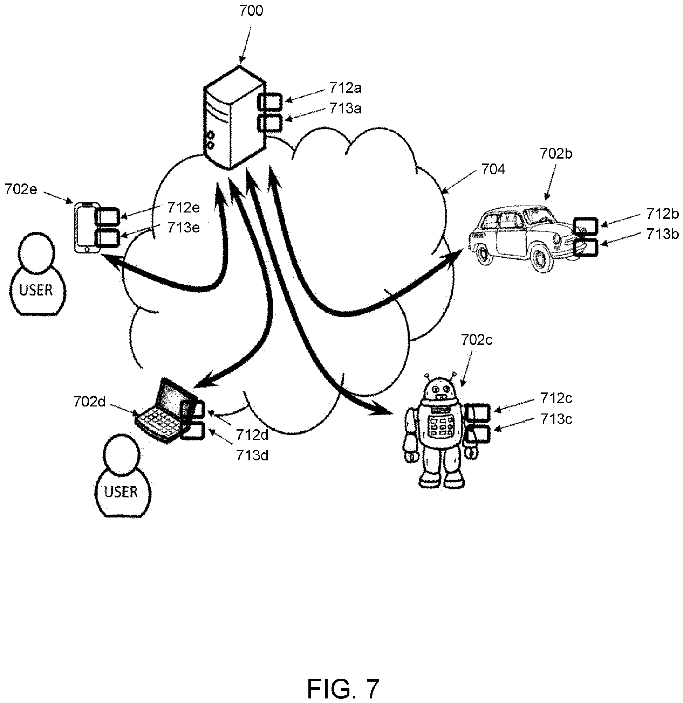

The above-mentioned systems, methods, and embodiments may be implemented within an architecture such as that illustrated in **Figure 7**, which comprises server 700 and one or more client devices 702 that communicate over a network 704 (which may be wireless and/or wired), such as the Internet, for data exchange. Server 700 and the client devices 702 each include a data processor 712 and memory 713, such as a hard disk. Client devices 702 may be any devices that communicate with server 700, including autonomous vehicle 702b, robot 702b, computer 702d, or cell phone 702e. More precisely, in an embodiment, the system according to the embodiments of Figs. 1 and 2 may be implemented by server 700.

In particular, autonomous vehicle 702b or robot 702b (which may be fully or partially autonomous) may be configured to perform the method 500. Specifically, autonomous vehicle 702b or robot 702b may be located in an environment and may be tasked with visiting a plurality of specified positions and returning to an origin, e.g. for recharging. Autonomous vehicle 702b or robot 702b may receive the backbone neural network 110 from server 700 and adjust adapters 104-t, 106-t, and 108-t according to task t. In some settings, the locations and the paths may involve three-dimensional coordinates (e.g., in a high-rise building).

Similarly, the disclosure may also be applied to an autonomous floating machine (e.g., submarine) or autonomous flying machine (e.g., drone). Accordingly, such autonomous machines (which may be fully or partially autonomous) may be configured to receive the backbone neural network 110 from server 700 and adjust adapters 104-t, 106-t, and 108-t according to task t. In this setting, the locations and the paths involve three-dimensional coordinates.

Further, an autonomous machine, such as vehicle 702b, robot 702b, the autonomous floating machine or the autonomous flying machine may have a maximal payload. The disclosed methods and systems may in particular be applied when vehicle 702b, robot 702b, the autonomous floating machine or the autonomous flying machine is tasked with transporting specific payloads to specific positions, transporting specific payloads to specific positions within specific time windows, or collecting payloads from specific positions. The disclosed methods and systems may also be applied at the vehicle 902b or robot 902b for selecting a robot payload from a set of payloads to maximize a metric value of the robot payload.

In other examples, the disclosed methods and systems may be applied when the autonomous machines (e.g., vehicle 702b, robot 702c, floating machine or flying machine) are part of a fleet of autonomous machines. The fleet of autonomous machines may be tasked with covering specific positions such that each position is within a radius of coverage of at least one of the autonomous machines.

Some or all of the method steps described above may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system.

Generally, embodiments can be implemented as computer program products with a program code or computer-executable instructions, the program code or computer-executable instructions being operative for performing one of the methods when the computer program product runs on a computer. The program code or the computer-executable instructions may, for example, be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor.

**Claims**

1. A method (500) for robot navigation, the method (500) comprising:

receiving (510) a backbone neural network (110), the backbone neural network (110) having been trained to solve a set of robot navigation tasks comprising a first robot navigation task (t), wherein the first robot navigation task (t) comprises optimizing a first path visiting a first number of first locations when considering first path costs;

receiving (520) a second robot navigation task, wherein the second robot navigation task comprises optimizing a second path visiting a second number of second locations when considering second path costs, wherein the second locations are locations in an environment of an autonomous machine, wherein the second number is different from the first number;

configuring (530) adapter layers for the backbone neural network (110) for forming a neural network pipeline, wherein the adapter layers comprise a node adapter (104-t), an edge adapter (106-t) and an output adapter (108-t), wherein the node adapter (104-t) is configured for receiving the second locations and providing a representation of the second locations to the backbone neural network (110), wherein the edge adapter (106-t) is configured for receiving the second path costs and providing a representation of the second path costs to the backbone neural network (110), and wherein the output adapter (108-t) is configured for receiving an intermediate solution of the second robot navigation task generated by the backbone neural network (110) and for generating an output of the pipeline; and

feeding (540) the second locations and the second path costs to the neural network pipeline to determine a path for the autonomous machine based on the output.

2. The method (500) of claim 1, further comprising instructing the autonomous machine to move in the environment in accordance with the determined path.

3. The method (500) of claim 1 or claim 2, wherein the feeding (540) the second locations and the second path costs to the neural network pipeline comprises iterating the neural network pipeline for the second number of times, wherein at each iteration the output selects a next location of the second locations.

4. The method (500) of claim 3, wherein the instructing the autonomous machine to move in the environment in accordance with the determined path includes, in response to completing a first iteration of the neural network pipeline, instructing the autonomous machine to start moving to the next location selected in the first iteration of the neural network pipeline.

5. The method (500) of one of claims 1 to 4, wherein the first path costs are according to an Euclidean metric for distances between the first locations, wherein the second path costs do not conform to any Euclidean metric.

6. The method (500) of one of claims 1 to 5,

wherein the first robot navigation task is an instance of a first combinatorial optimization problem, and wherein the second robot navigation task is an instance of a second combinatorial optimization problem different from the first combinatorial optimization problem, wherein the configuring (530) adapter layers further comprises:

performing few-shot training of the node adapter (104-t), the edge adapter (106-t), and the output adapter (108-t) to adjust the neural network pipeline to solve the second robot navigation task.

7. The method (500) of claim 6, wherein during the performing the few-shot training, parameters of the backbone neural network (110) are frozen.

8. The method (500) of claim 6 or claim 7, wherein the performing the few-shot training is based on imitation learning based on an algorithm for solving instances of the second combinatorial optimization problem or is based on reinforcement learning.

9. The method (500) of one of claims 6 to 8, wherein the second combinatorial optimization problem is the Maximum Coverage Location Problem.

10. A method (400) of training neural network pipelines for robot navigation, the method (400) comprising:

generating (410) a plurality of training data sets, wherein each training data set corresponds to a robot navigation task of a plurality of robot navigation tasks, wherein the generating a training data set of the plurality of training data sets comprises:

generating a number of training samples of the respective robot navigation task; and

solving the training samples by an algorithm for the respective robot navigation task; and

training (420) a plurality of neural network pipelines with the plurality of training data sets, wherein all neural network pipelines share a backbone neural network (110), wherein each neural network pipeline further comprises a task-specific node adapter (104-t), a task-specific edge adapter (106-t), and a task-specific output adapter (108-t).

11. The method (400) of claim 10, wherein the backbone neural network (110) comprises a predefined number (L) of layers (210-1,..., 210-L), wherein each layer comprises a mixed-score self-attention block, wherein the mixed-score self-attention block is configured to combine a node representation, a mask (m), and an edge representation, wherein the mask (m) is provided by a masking block (102-t) and the edge representation is provided by the task-specific edge adapter (106-t).

12. A computer-readable medium (713) comprising instructions that, when executed by a processing unit (712), cause the processing unit (712) to perform the method of any one of claims 1 to 11.

13. An autonomous machine comprising:

position sensors;
means of propulsion;
a processing unit (713); and
a memory unit (712) connected to the processing unit (713),
wherein the memory unit (712) stores a plurality of trained neural network pipelines corresponding to a plurality of machine navigation tasks, wherein the trained neural network pipelines comprise a shared backbone neural network and task-specific adapter layers.

14. The autonomous machine of claim 13, wherein the machine is tasked with visiting a plurality of locations before returning to a depot.

15. The autonomous machine of claim 13 or claim 14, further comprising:

means for transporting a payload,
wherein the machine is tasked with one or more of:

delivering a plurality of payloads from a depot to a plurality of locations;
delivering a plurality of payloads from a depot to a plurality of locations, wherein for each location, one or more of the payloads has to be delivered within a specific time window;
transporting a plurality of payloads from a plurality of locations to a depot; and
selecting one or more payloads from a plurality of payloads to maximize a metric value of the one or more payloads while taking into account a maximum load of the machine.

FIG. 1

FIG. 2

FIG. 3

400

generate training data sets with help of oracles — 410

train pipelines with training data set — 420

reinforcement training of further pipelines — 430

FIG. 4

500

```
receive backbone neural network
trained for first robot navigation task          ⌐510

                    │
                    ▼

        obtain second robot navigation task      ⌐520

                    │
                    ▼

      configure adapter layers and form          ⌐530
                 pipeline

                    │
                    ▼

       feed second robot navigation task to      ⌐540
                 pipeline

                    │
                    ▼

        instruct robot to navigate based on      ⌐550
                determined path
```

FIG. 5

FIG. 6

FIG. 7

Europäisches Patentamt

European Patent Office

Office européen des brevets

## EUROPEAN SEARCH REPORT

**Application Number**

EP 24 15 5250

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Wang Chenguang ET AL: "EFFICIENT TRAINING OF MULTI-TASK COMBINARO-TIAL NEURAL SOLVER WITH MULTI-ARMED BANDITS", , 9 October 2023 (2023-10-09), XP093183978, Retrieved from the Internet: URL:https://arxiv.org/pdf/2305.06361 [retrieved on 2024-07-09] * Appendix A and E; page 1 - page 10 * | 1-15 | INV. G06N3/096 G06N3/045 G06N5/01 ADD. G06N3/092 G06N3/008 |
| X | SENG JOHN S ET AL: "Autonomous Outdoor Building Navigation Using a Single Monocular Camera", 2022 3RD INTERNATIONAL CONFERENCE ON ARTIFICIAL INTELLIGENCE, ROBOTICS AND CONTROL (AIRC), IEEE, 10 May 2022 (2022-05-10), pages 107-113, XP034158990, DOI: 10.1109/AIRC56195.2022.9836985 [retrieved on 2022-07-29] | 10,12-15 | |
| A | * page 107 - page 112; figures 1-5 * | 1-9,11 | |
| A | YEONG-DAE KWON ET AL: "Matrix Encoding Networks for Neural Combinatorial Optimization", ARXIV.ORG, CORNELL UNIVERSITY LIBRARY, 201 OLIN LIBRARY CORNELL UNIVERSITY ITHACA, NY 14853, 26 October 2021 (2021-10-26), XP091067536, * the whole document * | 1-15 | |

**TECHNICAL FIELDS SEARCHED (IPC)**

G06N

The present search report has been drawn up for all claims

| Place of search | Date of completion of the search | Examiner |
|---|---|---|
| The Hague | 10 July 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Combinatorial Optimization: Theory and Algorithms. **KORTE** ; **VYGEN**. Algorithms and Combinatorics. Springer-Verlag, vol. 21
- **VAZIRANI**. Approximation Algorithms. Springer-Verlag
- **BOUSSAÏD** ; **LEPAGNOT** ; **SIARRY**. A Survey on Optimization Metaheuristics. *Information Sciences*, vol. 237, 82-117
- **BELLO et al.** Neural Combinatorial Optimization with Reinforcement Learning. *arXiv:1611.099402017*
- **NAZARI et al.** Reinforcement Learning for Solving the Vehicle Routing Problem. *Advances in Neural Information Processing Systems, NeurIPS*, 2018, vol. 31
- **KOOL et al.** Attention, Learn to Solve Routing Problems. *International Conference on Learning Representations, ICLR*, 2019
- **KWON et al.** POMO: Policy Optimization with Multiple Optima for Reinforcement Learning. *NeurIPS*, 2020
- **ZHANG et al.** Learning to Dispatch for Job Shop Scheduling via Deep Reinforcement Learning. *NeurIPS*, 2020
- **KWON et al.** Matrix Encoding Networks for Neural Combinatorial Optimization. *NeurIPS*, 2022
- **KHALIL et al.** Learning Combinatorial Optimization Algorithms over Graphs. *NIPS*, 2017
- **QIU et al.** DIMES: A Differentiable Meta Solver for Combinatorial Optimization Problems. *NeurIPS*, 2022
- **DRAKULIC et al.** BQ-NCO: Bisimulation Quotienting for Generalizable Neural Combinatorial Optimization. *arxiv:2301.03313*, 2023
- **CHOO et al.** Simulation-Guided Beam Search for Neural Combinatorial Optimization. *NeurIPS*, 2022
- **FU et al.** Generalize a Small Pre-trained Model to Arbitrarily Large TSP Instances. *Proceedings of the AAAI Conference on Artificial Intelligence*, vol. 35 (8), 7474-7482

- **HOTTUNG et al.** Efficient Active Search for Combinatorial Optimization Problems. *ICLR*, 2022
- Attention is all you need. **VASWANI et al.** Advances in Neural Information Processing Systems. Curran Associates, Inc., 2017, vol. 30, 5998-6008
- **SUTTON** ; **BARTO**. Reinforcement Learning: An Introduction. MIT Press, 2018
- **APPLEGATE et al.** *Concorde TSP Solver*, 2015
- An Extension of the Lin-Kernighan-Helsgaun TSP Solver for Constrained Traveling Salesman and Vehicle Routing Problems. **HELSGAUN**. Technical report. Roskilde University, 2017
- **VIDAL**. Hybrid Genetic Search for the CVRP: Open-source Implementation and SWAP* Neighborhood. *Computers & Operations Research*, 2022, vol. 140, 105643
- **KOBEAGA et al.** An Efficient Evolutionary Algorithm for the Orienteering Problem. *Computers & Operations Research*, 2018, vol. 90, 42-59
- **DIDIER et al.** OR-Tools: Vehicle Routing Solver: a Generic Constraint-Programming Solver with Heuristic Search for Routing Problems. *Google research*, 2023
- **CAI et al.** Towards faster local search for minimum weight vertex cover on massive graphs. *Information Sciences*, 2019, vol. 471, 64-79, https://github.com/kjcm150/fastwvc
- **XIN et al.** Multi-Decoder Attention Model with Embedding Glimpse for Solving Vehicle Routing Problems. *Proceedings of the AAAI Conference on Artificial Intelligence*, vol. 35 (13), 12042-12049
- **KIM et al.** Leveraging Symmetricity for Neural Combinatorial Optimization. *NeurIPS*, 2022
- **FALKNER** ; **SCHMIDT-THIEME**. Learning to Solve Vehicle Routing Problems with Time Windows through Joint Attention. *arXiv:2006.09100*